# EUROPEAN PATENT APPLICATION

(11) **EP 4 130 663 A1**
(43) Date of publication of application: **08.02.2023**
(21) Application number: 21275101.0
(22) Date of filing: 02.08.2021
(51) Int. Cl.: G01C 21/00, G01C 21/20, G06Q 10/06

(54) **POSITIONING APPARATUS AND METHOD**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

There is disclosed a positioning apparatus for an operator at an object, the apparatus comprising:
- A personal sensor, whereby the operator's environment may be assessed to generate sensor data;
- A personal feedback device for issuing at least one alert signal to the operator;
- A processing unit, operably connected to the personal sensor, and the personal feedback device, the processing unit comprising:
- an exclusion zone module for defining a region the operator should remain outside of, and
- a positioning module for generating positioning data for determining the position of the personal sensor relative to the object,
- a task module for assigning a task to the operator and generating an associated desired position for the operator, and
- a path planning module for generating a path from the operator position to the desired position, which avoids the exclusion zone
- an alert module configured such that a set of routing alert signals are issued to the operator in dependence on the position of the personal sensor compared to the desired position or the path thereto.

## Description

### FIELD

The present invention relates to a positioning apparatus and method.

### BACKGROUND

Where an operator is expected to be in proximity to an object, and perform a task or series of tasks on the object, a number of journeys between various points on the object, and possibly between other locations around the object may be necessary.

For example, where an operator is expected to perform a set of maintenance tasks on an aircraft in a maintenance bay, a number of journeys may need to be made between the particular locations at the aircraft where tasks are to be performed. Further, journeys may need to be made between the aircraft and an associated workstation or workstations. Typically, operators determine their own routes for such journeys.

### SUMMARY

According to an aspect of the present invention, there is provided a positioning apparatus for an operator at an object, the apparatus comprising: a personal sensor, whereby the operator's environment may be assessed to generate sensor data; a personal feedback device for issuing at least one alert signal to the operator; and a processing unit, operably connected to the personal sensor, and the personal feedback device, the processing unit comprising: an exclusion zone module for defining a region the operator should remain outside of, a positioning module for generating positioning data for determining the position of the personal sensor relative to the object, a task module for assigning a task to the operator and generating an associated desired position for the operator, a path planning module for generating a path from the operator position to the desired position, which avoids the exclusion zone, and an alert module configured such that a set of routing alert signals are issued to the operator in dependence on the position of the personal sensor compared to the desired position or the path thereto.

Such an apparatus can tend to enable an operator to be guided to their task, or set of tasks, in a controlled manner that can be integrated into a broader maintenance scheduling system. Further, it can offer integration with other efficiency driving techniques. Still further, where the object is hazardous, it may help guide an operator around an object in a way that tends to avoid particularly hazardous regions at the object.

The task module may define a plurality of tasks which may be performed on the object, the task module being configured such that an assigned task may be defined, the assigned task being a task selected from the plurality and assigned to the operator.

Accordingly there can be provided a set of tasks which may be specific to a given object, so that various tasks if not its entire maintenance can be scheduled with reference to path planning and the potential efficiencies offered.

The apparatus may comprise a control input device whereby the operator may define an assigned task.

As such the operator can set themselves tasks.

The path planning module may be configured to calculate at least a first and a second path between the operator position and the desired position, and select a chosen path therefrom, against at least one predefined criterion.

Accordingly, the travelling of the operator, as they go about their task or tasks, can tend to be optimised for various optional priorities.

For example the at least one predefined criterion may select for the shortest path or transit time between the operator position and the desired position.

As such, the distance travelled or the time to complete the task or set of tasks can tend to be reduced.

The path planning module may be configured to execute an A-star (A*) routing algorithm to select the chosen path.

Such an algorithm can provide continuous real-time path planning.

The set of routing alert signals may comprise instructions for a set of audible or haptic signals issued to the user at the personal feedback device.

Such signals can tend to convey information to the operator without obstructing their view or adding to their visual workload.

The apparatus may further comprise a personal display, operably connected to the processing unit whereby augmenting imagery can be introduced into the operator's field of view, and wherein the set of routing signals comprise instructions for the generation of augmenting imagery for guiding the operator.

Accordingly, the path can be presented to the operator in an intuitive and easily followed symbology.

The augmenting imagery for guiding the operator may comprises a marker or set of markers extending between the operator and the desired position.

The exclusion zone module may comprise: an object identification module, for obtaining object data relating to the object; a boundary module for defining, using the object data, at least one first extended boundary for the object.

Where such an apparatus is provided it can tend to recognise certain objects, and their respective boundaries, and so guide the operator around them automatically, thereby potentially reducing the operator's cognitive workload.

The object identification module may comprise: an object recognition module; and an object database comprising at least one set of object data, each set of object data being associated with a corresponding predetermined object; whereby the processing unit is configured to receive sensor data, compare it with the at least one set of object data in the object database, and in the event that the correlation between the sensor data and one of the at least one set of object data is above a threshold, generate a signal indicating the identification of the corresponding predetermined object.

The boundary module may define, using the object data, at least one second extended boundary for the object, the second extended boundary being peripheral to the first extended boundary, and the apparatus being configured such that on entry into the second extended boundary, the operator is issued with a first boundary alert signal.

The first boundary signal alert may comprises displaying, at the personal display as augmenting imagery, the first extended boundary, and wherein the first extended boundary is the region the operator should stay outside of.

Whilst this provides for clear demarcation of physical obstacles, it can also help to mark less visible zones, such as those which may be hazardous and extend beyond the physical boundaries of the object. For example where the object is an aircraft, the hazardous zones around the intakes and exhausts of the engine could be defined as part of the first extended boundary.

The object may be a vehicle undergoing maintenance. In particular, the vehicle may be an aircraft being maintained in a hangar.

As such, the cost or resource involved with maintaining a vehicle can be reduced or the consistency with which vehicles are maintained can be improved. Such a provision can tend to be of particular use where the vehicle is a complex vehicle, or a fleet of complex vehicle.

According to a further aspect of the invention, there is provided a method of positioning an operator at an object, the method comprising: generating sensor data, at a personal sensor, and thereby assessing the operator's environment; generating positioning data, at a positioning module, for determining the position of the personal sensor relative to the object; providing a processing unit, operably connected to the personal sensor, and a personal feedback device, and at the processing unit: defining, at an exclusion zone module, a region the operator should remain outside of; assigning, at a task module, a task to the operator and generating an associated desired position for the operator; and generating, at a path planning module, a path from the operator position to the desired position which avoids the exclusion zone; and, issuing, at an alert module or personal feedback device, to the operator a set of routing alert signals in dependence on the position of the personal sensor compared to the desired position or the path thereto.

### BRIEF DESCRIPTION OF THE FIGURES

Embodiments of the invention will now be described by way of example only with reference to the figures, in which:
Figure 1 shows a schematic diagram of an apparatus according to the present invention;
Figure 2a shows a view from above of an operator in proximity to an object, with a first boundary and a second boundary indicated schematically, Figure 2b shows an operator's perspective on the scene of Figure 2a;
Figure 3a shows a side view of an operator approaching an aircraft in a hangar and Figure 3b shows a corresponding operator's view, the operator being outside the hazard zone and the show zone;
Figure 4a shows a side view of an operator approaching an aircraft, and Figure 4b shows a corresponding operator's view, the operator being outside the hazard zone and inside the show zone, and Figure 4c shows a further operator's view with the operator in a further position outside the hazard zone and inside the show zone;
Figure 5a shows a side view of an operator approaching an aircraft and Figure 5b shows a corresponding operator's view, the operator being inside the hazard zone;
Figure 6 shows a control input for gesture based switching between different boundary types;
Figure 7a shows a operator's view of an alternative boundary at a first time, Figure 7b shows the operator's view of Figure 7a at a later time, and Figure 7c shows the operator's view of figure 7a at an even later time;
Figure 8 shows an operator's view of another alternative boundary;
Figure 9 shows a headset as may be used in the positioning apparatus;
Figure 10a shows a first path planning scenario for an operator at a first position in respect of an aircraft due a first operation;
Figure 10b shows a second path planning scenario for an operator at a second position in respect of an aircraft due a first operation;
Figure 11 shows a third path planning scenario for an operator at a third position in respect of an aircraft due a first operation;
Figure 12 shows an operator's field of view through a display in use during a fourth path planning scenario; and
Figure 13 shoes a flow diagram for a method of positioning an operator.

### DETAILED DESCRIPTION

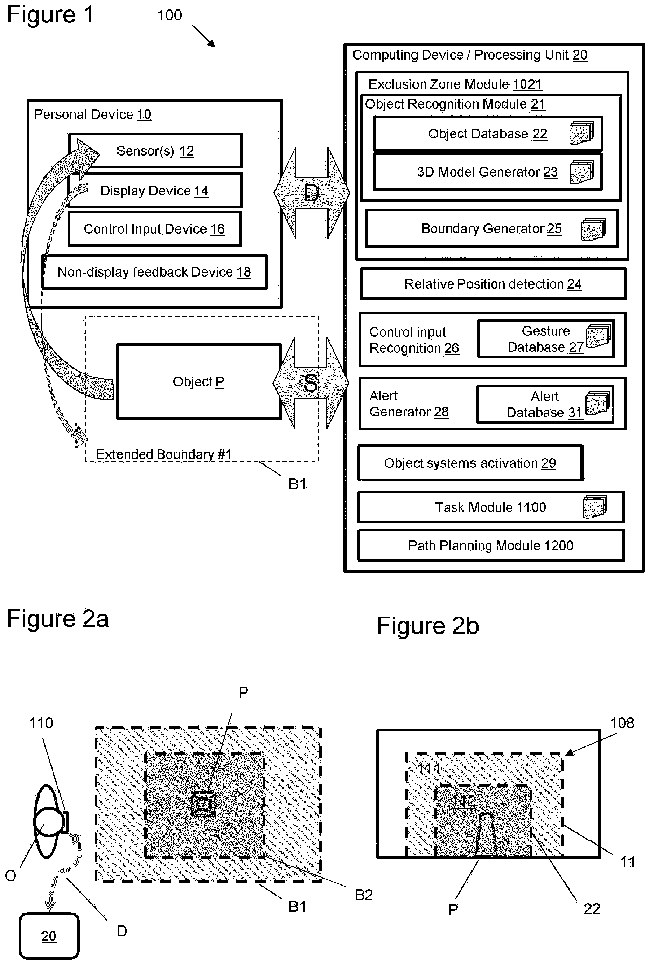

Referring to Figure 1, there is shown a positioning apparatus 100 being used in relation to an object P.

The positioning apparatus 100 comprises a personal device 10 and a processing unit 20 which are operably connected so as to be able to send and receive data D between themselves. Data D is, in the present example sent by a wireless communications protocol, and both the personal device 10 and the processing unit 20 are provided with respective communications modules (not shown) for this purpose. (In other examples, the personal device 10 and processing unit 20 may be provided within the same housing as a user-worn or user-carried unit).

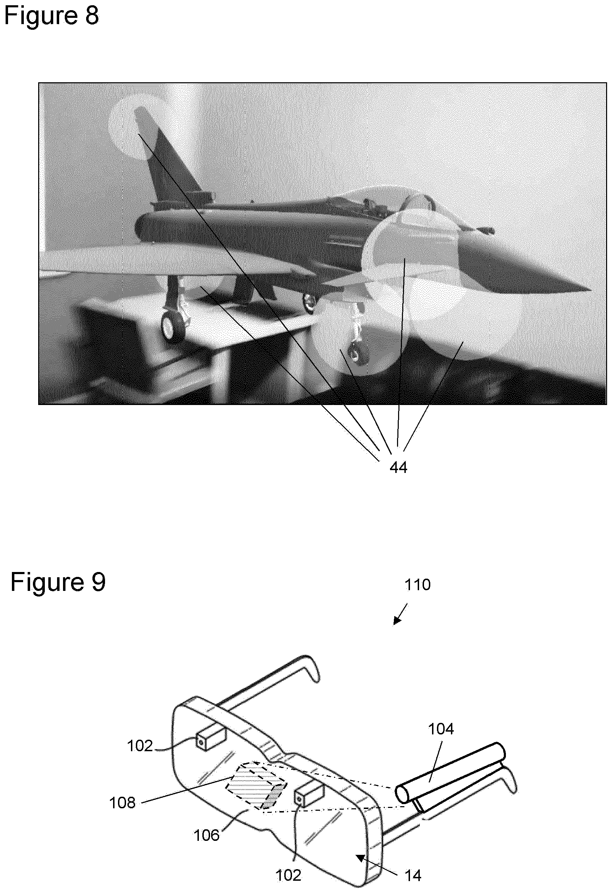

The personal device 10, with further reference to Figure 9, is configured to be worn or carried by an operator O, and in the present example has the form of a headset unit 110, which may be mounted on the operator's head such that it may extend into the operator's field of view.

The personal device 10 comprises a personal sensor 12, a personal display 14 for use as a visual feedback device, a personal control input device 16, and a non-display feedback device 18.

The personal sensor 12 is configured to scan, receive or detect characteristics of the operator's ambient environment and particularly their field of view, and thereby derive sensor data. In the present example, and referring to Figure 9, the personal sensor 12 comprises a pair of image sensors 102 (cameras operating in the visible light range) with a field of view substantially overlapping with the operator's field of view. The pair of image sensors are spaced apart laterally in the operator's eye line to permit stereoscopic depth perception.

The personal display 14 is configured to introduce augmenting imagery 108 into the operator's field of view, as a human-interpretable signal or alert. Such augmenting imagery 108 may alternatively be referred to as 3D models, 3D volumes, computer generated imagery, additional imagery, or holograms. In the present example the personal display 14 comprises a see-through visor 106 and a projector 104. The visor 106 covers at least a portion of the operator's field of view and the projector 104 is arranged to project augmenting imagery 108 onto the visor 106 such that, from the operator's perspective, the augmenting imagery 108 can appear to be located in front of them and beyond the visor 106 (i.e. at a focal length beyond the visor 106). Accordingly, the personal display 14 is arranged to receive suitable display data for driving the projector 104 to achieve desired augmenting imagery 108.

The personal control input device 16 is configured to convert operator commands into control data, which may be relayed for example to the processing unit 20. In the present example, the personal control input device 16 comprises image sensors (which may be the image sensors 102 used for generating the sensor data) for capturing the hand gestures of the operator.

The personal non-display feedback device 18 is configured to provide human-interpretable signals or alerts to the operator, which may supplement or replace such signals or alerts being provided at the display 14. In the present example, the feedback device 18 is an audio speaker (not shown) for issuing audible information.

The processing unit 20 comprises an exclusion zone module 1021, a relative position detection module 24, a control input recognition module 26, a gesture database 27, an alert generator 28, an object systems activation module 29, a task module 1100, and a path planning module 1200.

The exclusion zone module 1021 comprises an object recognition module 21 and a boundary generator module 25. The exclusion zone module 1021 is operable to define an area where the operator cannot enter. For example, this may be the footprint or physical boundary of the object.

The object recognition module 21 further comprises an object database 22 and a 3D model generator module 23. The object recognition module 21 is arranged to receive sensor data (e.g. from the personal sensor 12) and compare it to sets of stored object data in the object database 22. Where sensor data matches a set of stored object data, the corresponding object may be confirmed as present.

The object recognition module 21 is also operable to determine and select from the 3D model generator module 23 a 3D model of a predetermined object, chosen from a number of possible predetermined objects. In the present example the 3D model may be selected to correspond to the object confirmed as present by sensor data comparison. That 3D model represents object data, albeit model object data rather than stored object data.

The 3D model has the form of imaging instructions for the display where an object is defined by algorithmic polygons such that a view of the object can be readily updated in real-time as the operator's perspective changes to give the impression that a 3D object is present at a particular location in the operator's environment. Often, the 3D model will be anchored to the real world object it corresponds to.

The relative position detection module 24 is configured to receive sensor data and object data from the object recognition module 21, perform a calculation from these, and thereby determine the operator's position in relation to the object. The calculation may be based on an analysis of the orientation and scale of the object, as detected in the sensor data, compared with the relevant object data, as may be retrieved from the object database. Accordingly the relative position detection module 24 is configured to process sensor data and output positioning data for further use by the processing unit 20.

The boundary generator module 25 is configured to receive object data from the object recognition module 21, and thereby be informed as to any object(s) detected. Further, the boundary generator module 25 is configured to parse the detected object, with reference to the control input recognition module 26, and then generate boundary data defining a zone e.g. that extends beyond the detected object's physical boundary. In order to generate such boundary data, the module 25 may retrieve it from a prepopulated database (e.g. where particular pre-defined boundaries are mapped to pre-defined objects), or may calculate it using a selection of parameters (e.g. by adding a fixed-distance stand off boundary around the outline of the 3D model of the object).

The control input recognition module 26 is configured to receive control data from the control input device 16. In the present example, the control input recognition module 26 receives control data and performs gesture recognition, with reference to the gesture database 27. The gesture database 27 maps gestures to control actions, or data representative of control actions. Thus the processing unit 20 is configured to recognise a gesture and issue a control action command associated with that gesture.

The alert module 28 is configured to receive positioning data and boundary data, make a determination as to whether the operator is within the boundary (i.e. whether there has been a boundary intrusion), and then generate alert data accordingly. Alert data may be sent to the personal feedback devices 14 and 18. The alert generator may be provided with an alert database 31, mapping boundary intrusions to alerts.

The object systems activation module 29 is operable to receive control action command data from the control input recognition module 26, and convert that command into an appropriate systems signal S for transmission to the object P, such that the object P responds accordingly.

The task module 1100 is operable to assign a maintenance or other task to the operator. The task module 1100 comprises an object-task database listing particular aircraft against respective maintenance or other tasks and further listing a desired operator position against each task for each aircraft. A selection of the object and the task can be effected.

Where the processing unit 20 has identified a particular object, this may be used to filter the options within the object-task database.

The operator may be able to browse the object-task database, and assign tasks to themselves, using the control input device 16.

The path planning module 1200 is operable to, once a task has been assigned to the operator at the task module 1100, and using data from the relative position detection module 24, determine a route between the operator's present position, and the desired position associated with the assigned task.

In particular the path planning module 1200 comprises an A-star (or A*) routing algorithm to determine the route. Such an algorithm seeks to minimise the cost of a route where the cost can be defined as, for example, the distance travelled or the time spent travelling. Such an algorithm can discretize the available space (e.g. using a grid) to facilitate the calculation of the route, where the finer the resolution of the grid, the more precisely a route can be determined.

The path planning module 1200 is operable to communicate with the alert generator 28 such that, once a route is determined, corresponding alert signals can be communicated to the operator in order to guide the operator along the route, or at least make the operator aware of what the route is.

The data D being relayed between the personal device 10 and the processing unit 20 may comprise any combination of sensor data or control action command data (being transmitted from the personal device 10 to the processing unit 20) or display data (being transmitted from the processing unit 20 to the personal device 10) or feedback device / alert data (being transmitted from the processing unit 20 to the personal device 10).

With reference to Figure 2a, a first operational scenario for the apparatus 100 shows an operator O wearing a personal device in proximity to an object P. The personal device 10 is in the form of a headset 110, mounted over the operator's field of view. The personal device 10 is operably communicating data D over a wireless link with processing unit 20.

Surrounding the object P are two boundaries B1 and B2, shown as squares with dashed outlines. These are conceptual boundaries insofar as they would not ordinarily be visible in a real world top-down view as per Figure 2.

However, the operator O is able to view augmented imagery representative of these boundaries, at their personal device 10. Further, as shown in the operator's view in Figure 2b, the apparatus has been configured so that the operator can at all times, if looking in the relevant direction, see visual representations 11 and 12 of the first boundary B1 and the second boundary B2 respectively, surrounding the object P. These boundaries are anchored to the real world object P, that is to say their position relative to the object P is fixed.

The first boundary, B1 is an outer extended boundary around the object P, which defines a first zone and is shown as a hatched volume 111 bounded by the wireframe boundary 11, and being transparent.

The second boundary, B2 is an inner extended boundary around the object P, which defines a second zone and shown as a shaded volume 112 bounded by the wireframe boundary 22, and being transparent.

In this example, boundary B2 is contained with within boundary B1 and the second zone is entirely within the first zone.

In operation under the first operational scenario, as the operator faces the object P, the cameras 102 of the headset unit 110 capture images of the scene and relay these as sensor data to the processing unit 20.

Next, at the processing unit 20, the sensor data is received by the object detection module 21 which compares the sensor data to object data in the object database 22. A match between the sensor data and a database entry relating to a predefined object P is found and it is thereby determined that object P is present.

Further, by analysis of the scale and orientation of the object P as represented by the sensor data, the position of the operator can be inferred. The object recognition module 21 intermittently repeats this process to track, substantially in real-time, the position of object P. (Depending on the interval between object recognition processes, the previously known location of the recognised object may be read to a memory (not shown), and optionally combined with data from other positioning resources (e.g. spatial mapping) for an absolute position.)

Once the match is established the boundary generator module 25 can be consulted by the processing unit 20 to determine the boundary or boundaries that are associated with this object. In this example, inputting object data relating to object P to the boundary generator 25 returns two nested cuboid boundaries B1 and B2.

Further, by reference to the alert generator 28, the processing unit 20 determines that for each of these particular boundaries for this particular object, object P, the applicable alert is in the form of:
- A visually represented hatch-rendered 3D model of the zone defined by B1, which is transparent; and
- a visually represented shade-rendered 3D model of the zone defined by B2, which is transparent;
- which are both on display to the operator regardless of whether the operator is inside or outside of either boundary.

Once the boundaries, and the alert, and the conditions under which the alert is displayed are retrieved or generated, the processing unit 20 generates appropriate display data, which is relayed to the personal device 10, received by the display 14, and introduced as augmenting imagery 108 into the operator's field of view.

The augmenting imagery is visually representative of the boundaries such that, from the operator's perspective, the 3D model of the boundary is coincident with the respective conceptual boundary. To tend to effect this, 3D models are scaled, positioned, and oriented accordingly.

Display of the 3D model of the object, as augmenting imagery 108 or otherwise, is optional.

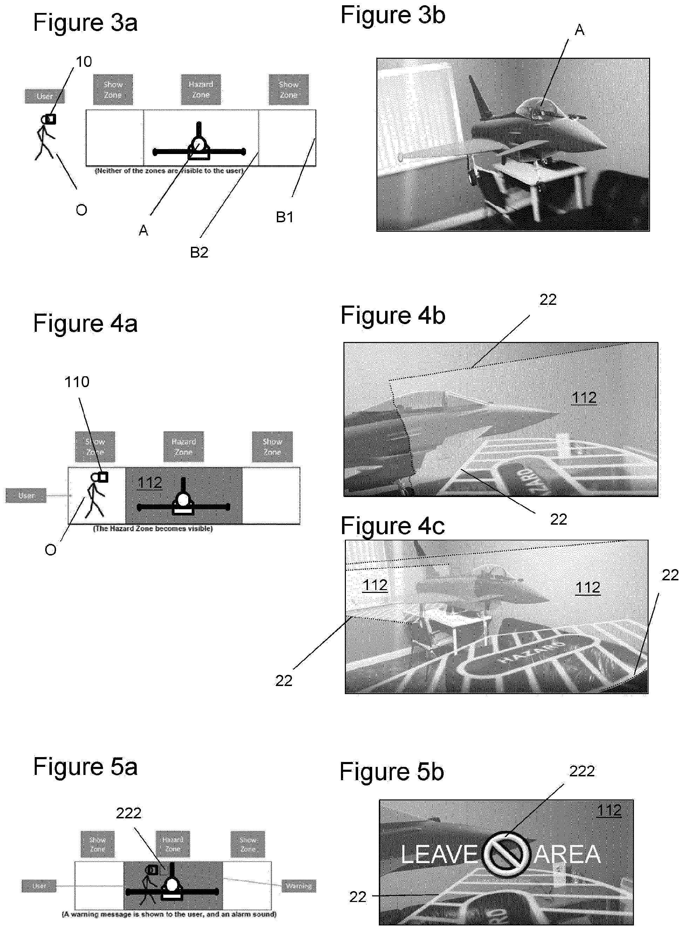

With reference to Figures 3 to 8, a second operational scenario for the apparatus 100 shows an operator O wearing a personal device 10, in the form of a headset 110, and being in proximity to an Aircraft A.

In this second scenario, the processing unit 20 is configured such that the recognition of Aircraft A calls up from the boundary generator 25 a first boundary B1 and a second boundary B2.

The second boundary B2 has, approximately, the form of a first and second wedge. The first wedge has a narrowest point at the intake to the Aircraft A's engine and extends out 80 degrees to the azimuth on each side of the centreline to a radius approximately equal to the length of the aircraft. The second wedge has a narrowest point at the exhaust vents of the engine and extends out at 30 degrees to the azimuth in each direction to a radius of approximately equal to the length of the aircraft.

The first boundary B1 extends beyond the first and second wedge of boundary B2 so as to provide a 2 metre deep buffer zone around the second boundary B2.

Further, the processing unit 20 is configured such that the alert module 28:
provides a first alert signal, issued if the operator is detected as being within the first boundary, whereby the second boundary becomes visible to the operator; and
provides a second alert signal, issued if the operator is detected as being within the second boundary, whereby a warning message anchored to the operator's field of view, becomes visible to the operator.

Accordingly, operation under the second operational scenario, is as follows.

When the operator O is positioned as in Figure 3a and 3b, that is to say stood outside of boundary B1 and boundary B2, then the positioning apparatus 100 will recognise the Aircraft A, call up the relevant boundary and alert data, reference the positional data, and determine that no alerts are necessary. Hence no augmenting imagery 108, 11 or 22, relating to the boundaries is introduced to the operators perspective, and only the Aircraft A is visible in the hangar.

However, when the operator O is positioned as in Figure 4a, 4b and 4c, that is to say within boundary B1 but outside of boundary B2, then the positioning apparatus 100 will:
recognise Aircraft A;
call up the relevant boundary data, specifically B1 and B2 for Aircraft A;
generate the positional data and determine that the operator O is within boundary B1 but not B2;
determine at the alert module 28 that given the object identified, Aircraft A, and the boundaries associated therewith, and the position of the operator in respect of those boundaries, the predetermined alert is to display a visual representation 22 of the second boundary B2 to the operator; and
relay the relevant display data so that the display 14 can introduce augmenting imagery 108 representing the second boundary B2 as a shaded 3D volume 112 in a wireframe 22, anchored to the Aircraft A, into the operator's viewable environment.

Further, when the operator O is positioned as in Figure 5a or 5b, that is to say stood within boundary B1 and within boundary B2, then the positioning apparatus 100 will:
recognise Aircraft A;
call up the relevant boundary data, specifically B1 and B2 for Aircraft A;
generate the positional data and determine that the operator O is within boundary B1 and within boundary B2;
determine at the alert module 28 that given the object identified, Aircraft A, and the boundaries associated therewith, and the position of the operator in respect of those boundaries, the predetermined alert is to display a visual representation 22 of the second boundary B2 to the operator and also to display a warning message 'LEAVE AREA' 222 anchored in the centre of the operator's field of view; and
relay the relevant display data so that the display 14 can introduce augmenting imagery 108 representing:
   the second boundary B2 as a shaded 3D volume 112 in a wireframe 22, and anchored to the real world aircraft A, in to the operator's viewable environment; and
   the warning message 'LEAVE AREA' 222 anchored in the centre of the operator's field of view.

The positioning apparatus 100 of the present example is able to switch between certain boundary scenarios thereby offering the ability to switch according to the particular operation (e.g. maintenance operation) being performed. This switch may be effected automatically by the apparatus 100 communication with the platform or hangar infrastructure, but operation under direct control by the operator is now described.

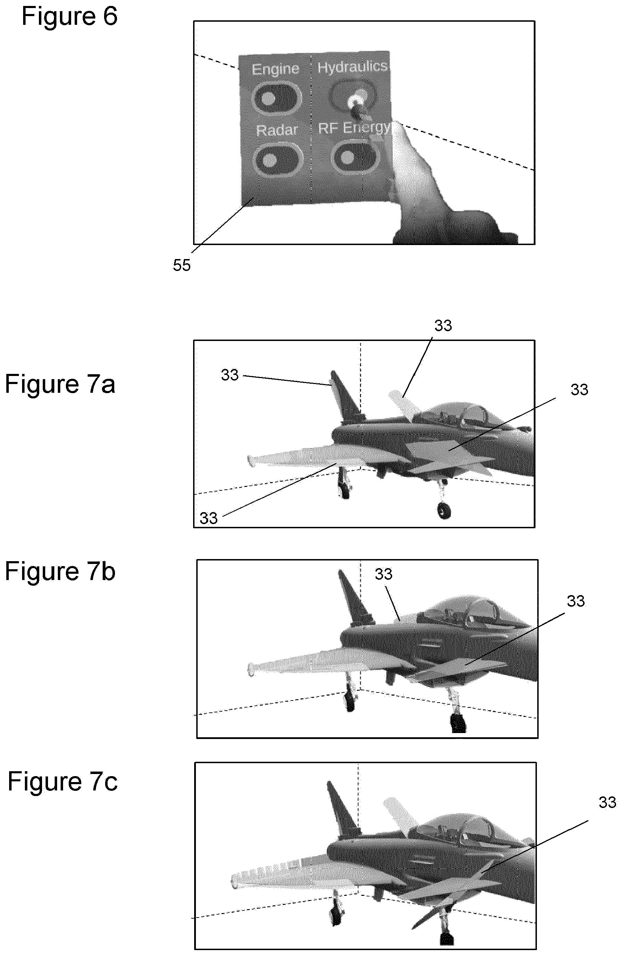

Referring to Figure 6, augmenting imagery 108 representing a control panel 55 can be provided in the operator's field of view and this can be combined with the gesture recognition abilities of the apparatus 100 to effect a switch between boundary scenarios.

Thus, as shown in Figure 6, the Aircraft A may be configured for any one of four boundary scenarios: Engine, Hydraulics, Radar and RF energy. The operator may switch each of these scenarios on or off by reaching out towards the augmented panel 55 and swiping their finger across in the corresponding region of their view.

In more detail what happens here is that the control input device 16 (e.g. cameras 102) generates control data as the gesture is performed. This is relayed to the processing unit 20 where it is received at the control input recognition module 26. From here the gesture can be recognised and related to the data held in the gesture database 27 to call up the corresponding control action command data. The corresponding control action command data can then be send to the boundary generator 25 to update the boundaries for display and can in turn also be sent to the object systems activation module 29 in order to switch on and off the real world systems on the aircraft.

Figures 7a to 7c show the Aircraft A configured for the 'hydraulic' boundary scenario. It can be seen that the boundary elements 33 are augmenting imagery 108 anchored to the Aircraft A, but also animated so as to dynamically alter their position around a fixed reference point (e.g. an axis anchored to the aircraft). The introduction of these boundary elements 33 into the operator's viewable area is prompted by an incursion of the operator into the first boundary B1.

Figure 8 shows the Aircraft A configured for the RF energy boundary scenario. It can be seen that the boundary elements 44 are a set of spherical boundary elements centred on respective RF emitting components of the Aircraft A. The introduction of these boundary elements 44 into the operator's viewable area is prompted by an incursion of the operator into the first boundary B1.

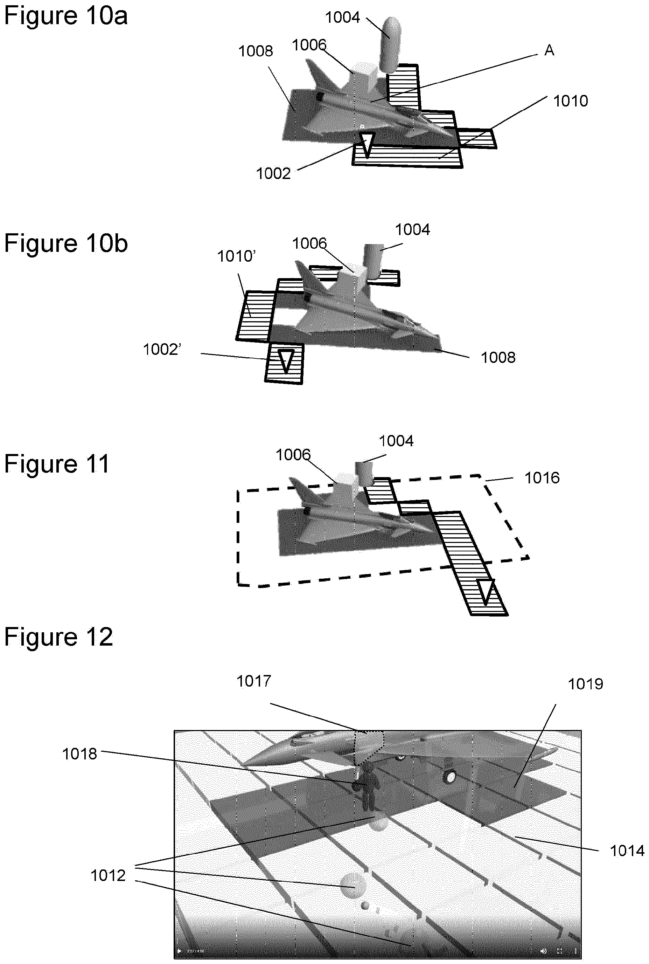

Figures 10a, 10b and 10c and Figure 12 show path planning scenarios for the maintenance of an aircraft A.

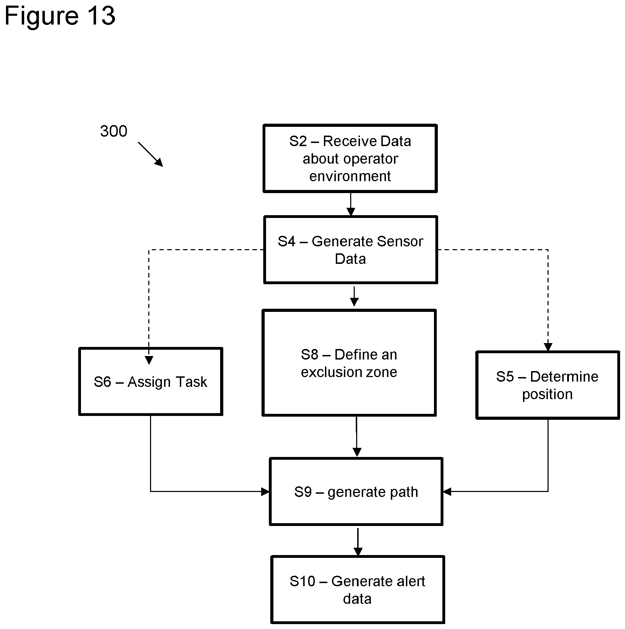

In operation, and with reference to Figure 13, each of these perform a method 300, whereby the system at a first step S2 receives data about the operator environment, and then at step S4 generates sensor data, and then at step S8 defines an exclusion zone. In parallel, and optionally in dependence of the sensor data, a step S6 of the method assigns a task to the operator, and a step S5 determines the position of the operator. At such point, step S9 is performed whereby the defined exclusion zone S8 is used with the task assigned at S6 and the position determined at S5, to generate a path. Subsequently, at step S10, alert data may be generated in dependence on the path.

The first and second scenarios in Figure 10a and 10b respectively are the same insofar as the same assigned task is defined and as such, through reference to the object-task database there is determined a location on aircraft 1006 where the task needs to be performed and desired operator position 1004 for performing the task.

Further, in both Figure 10a and 10b, the exclusion zone 1008 defined is the same. Here the exclusion zone 1008 approximates to the footprint of the aircraft and as such approximates to the physical boundary of the aircraft.

The scenarios of Figures 10a and 10b differ in that for the Figure 10a scenario, the operator is initially in a first position 1002, which position is midway along the length of the aircraft and next to the wing. Whereas in the Figure 10b scenario, the initial operator position is at the trailing edge of the wing.

It can be seen that this difference in the scenarios leads to different paths, 1010 and 1010' respectively between the operator and the desired location. More particularly, in the first scenario the path planning module 1200 has generated a route 1010 around the front of the aircraft. Whereas in the second scenario, the path planning module 1200 has generated a route 1010' around the back of the aircraft.

In a third scenario, shown in Figure 11, the user starts at a third position but has the same assigned task as in the first and second scenarios. However, in the third scenario, the positioning apparatus is configured to define a further boundary 1016, which is peripheral to the exclusion zone 1008. This operator is permitted to enter this boundary 1016 but once inside, it operates in an equivalent manner to the outer extended boundary B1 of the Figures 3 to 5 embodiment, insofar as entering into boundary 1016 prompts an alert to be issued to the operator.

More specifically, in the Figure 11 scenario, an operator entering within the outer extended boundary 1016 will have presented to them alerts to increase awareness of the exclusion zone 1008.

For example, where the operator is provided with a headset 110, the alerts to increase awareness of the exclusion zone 1008 would be an augmented imagery representation of the exclusion zone 1008, anchored and scaled to coincide therewith. Whereas prior to entering the extended boundary 1016, the exclusion zone 1008 would not have been displayed to the operator as augmenting imagery.

In operation, and with reference to Figure 12, the operator using the apparatus 100 for path planning is provided with a personal device 10 such as a headset 110 as shown in Figure 9 such that augmenting imagery can be presented.

The operational view of the operator using a headset 110 during a maintenance operation with path planning is shown in Figure 12.

The route 1010 is shown as augmenting imagery in the form of a series of spherical way points 1012. These coincide with certain tiles defined by augmenting imagery representing a grid 1014. The desired position 1004 is shown as augmenting imagery in the form of an avatar 1018 at the relevant position. The operational section of the aircraft 1006 is shown as augmenting imagery in the form of an animated panel 1017. Further, the exclusion zone 1008 is shown as augmenting imagery in the form of a footprint 1019 on the floor of the maintenance facility.

The processing unit 20 may be implemented by one or more microprocessors operably connected with one or more memory devices. Functions or modules or generators within the processing unit 20 may be performed within a common processor and using a common memory device, or may be performed on respective dedicated processors or respective dedicated memory devices.

The wireless communications protocol used to convey data D between the personal device 10 and the processing unit 20 may in an alternative example by provided by a light intensity modulated signal transmitter / receiver. Such technologies can be known as LiFi^{™}.

The personal device and processing unit may be provided within the same unit, which may be a wearable or portable unit. As such, the communication between the personal device and processing unit could be through direct electrical connection.

The personal device may be a wearable headset (which may alternatively be referred to as a head worn display HWD) suitable for virtual reality, mixed reality or augmented reality, but alternative personal devices are contemplated. For example, the personal device 10 could alternatively be any portable computer screen (e.g. LED array, OLED array) having a camera facing in the opposite direction to that in which the screen displays, so that the device may be held up to combine the live video feed with augmenting imagery. As such various personal computing devices such as camera phones, tablet computers, and smart watches may be suitable. Any of these may be mounted so as to extend into the user's view.

Where the personal device is wearable, and is worn to extend into the user's view, as a further alternative to options described about, the personal display may instead comprise waveguide technology or a retinal projector.

The personal sensor may, as an alternative to being a pair of imaging devices be a single imaging device, or may be one or more cameras operating outside of visible bands (e.g. IR bands) or may be an active device such as a LiDAR where the scene is subject to controlled illumination prior to processing returns.

In alternative embodiments, the position data may be supplemented or alternatively provided by data from other positioning modules such as spatial mapping (e.g. using a set of IR cameras to monitor large fixed objects such as walls), GPS, fiducial marker sets, or beacons (active or passive).

As an alternative to the personal control input device describe above, there may be provided a physical control actuator (e.g. a touch pad), or a microphone for voice activation.

As an alternative to the personal control input device for switching between hazard scenarios, the processing unit or display device may be able to detect the hazard scenario occurring at the platform, and consequently, and automatically, read the relevant hazard scenario(s) into the user's environment.

The personal device may be able to communicate directly with the object, as well as with the processing unit.

As an alternative to the object recognition module for object identification, object identification may be performed by the operator inputting observed spatial data (e.g. lateral and longitudinal maxima relating to the object) and classifying the observed spatial data against specified objects (e.g. a 'pick list' of predetermined object types) and subsequent processing at the processing unit to generate the relevant object data.

As an alternative to object recognition from direct visual cues, such as the shape of the object itself, object recognition may be effected by indirect visual cues or fiducial markers such as QR codes or text recognition, provided that relationships between QR codes and the object they represent are predetermined and stored in the object recognition database.

As an alternative to the A* (A-star) route planning algorithm, other route planning algorithms may be used. For example, other tree search algorithms may be used, such as Dijkstra's algorithm.

## Claims

1. A positioning apparatus for an operator at an object, the apparatus comprising:
- a personal sensor, whereby the operator's environment may be assessed to generate sensor data;
- a personal feedback device for issuing at least one alert signal to the operator;
- a processing unit, operably connected to the personal sensor, and the personal feedback device, the processing unit comprising:
- an exclusion zone module for defining a region the operator should remain outside of,
- a positioning module for generating positioning data for determining the position of the personal sensor relative to the object,
- a task module for assigning a task to the operator and generating an associated desired position for the operator,
- a path planning module for generating a path from the operator position to the desired position, which avoids the exclusion zone; and
- an alert module configured such that a set of routing alert signals are issued to the operator in dependence on the position of the personal sensor compared to the desired position or the path thereto.

2. An apparatus according to claim 1 wherein the task module defines a plurality of tasks which may be performed on the object, the task module being configured such that an assigned task may be defined, the assigned task being a task selected from the plurality and assigned to the operator.

3. An apparatus according to claim 2 further comprising a control input device whereby the operator may define an assigned task.

4. An apparatus according to any of the preceding claims wherein the path planning module is configured to:
calculate at least a first and a second path between the operator position and the desired position; and
select a chosen path therefrom, against at least one predefined criterion.

5. An apparatus according to claim 4 wherein the at least one predefined criterion selects for the shortest path or transit time between the operator position and the desired position.

6. An apparatus according to claim 4 or 5 wherein the path planning module is configured to execute an A-star routing algorithm to select the chosen path.

7. An apparatus according to any of the preceding claims wherein the set of routing alert signals comprise instructions for a set of audible or haptic signals issued to the user at the personal feedback device.

8. A positioning apparatus according to any one of the preceding claims further comprising:
- a personal display, operably connected to the processing unit whereby augmenting imagery can be introduced into the operator's field of view,
and wherein the set of routing signals comprise instructions for the generation of augmenting imagery for guiding the operator.

9. A positioning apparatus according to claim 8 wherein the augmenting imagery for guiding the operator comprises a marker or set of markers extending between operator and the desired position.

10. A positioning apparatus according to any of the preceding claims wherein the exclusion zone module comprises:
- an object identification module, for obtaining object data relating to the object;
- a boundary module for defining, using the object data, at least one first extended boundary for the object.

11. A positioning apparatus according to claim 10 wherein the object identification module comprises:
- an object recognition module; and
- an object database comprising at least one set of object data, each set of object data being associated with a corresponding predetermined object,
whereby the processing unit is configured to receive sensor data, compare it with the at least one set of object data in the object database, and in the event that the correlation between the sensor data and one of the at least one set of object data is above a threshold, generate a signal indicating the identification of the corresponding predetermined object.

12. A positioning apparatus according to claim 10 or 11 wherein the boundary module defines, using the object data, at least one second extended boundary for the object, the second extended boundary being peripheral to the first extended boundary, and the apparatus being configured such that on entry into the second extended boundary, the operator is issued with a first boundary alert signal.

13. A positioning apparatus according to claim 12 when dependent on claim 8 wherein the first boundary signal alert comprises displaying, as augmenting imagery, the first extended boundary, and wherein the first extended boundary is the region the operator should stay outside of.

14. A positioning apparatus according to any of the preceding claims wherein the object is a vehicle undergoing maintenance.

15. A method of positioning an operator at an object, the method comprising:
- generating sensor data, at a personal sensor, and thereby assessing the operator's environment;
- generating positioning data, at a positioning module, for determining the position of the personal sensor relative to the object;
- providing a processing unit, operably connected to the personal sensor, and a personal feedback device, and at the processing unit:
- defining, at an exclusion zone module, a region the operator should remain outside of;
- assigning, at a task module, a task to the operator and generating an associated desired position for the operator; and
- generating, at a path planning module, a path from the operator position to the desired position which avoids the exclusion zone; and
- issuing, at an alert module or personal feedback device, to the operator a set of routing alert signals in dependence on the position of the personal sensor compared to the desired position or the path thereto.
